# EUROPÄISCHE PATENTSCHRIFT

(11) **EP 2 429 916 B1**
(45) Veröffentlichungstag und Bekanntmachung des Hinweises auf die Patenterteilung: **23.01.2013**
(21) Anmeldenummer: 10718830.2
(22) Anmeldetag: 06.05.2010
(51) Int. Cl.: B65D 65/14, B65D 85/76, B32B 7/06, B65D 33/16, B65D 75/58, B65D 75/66

(54) **FOLIE ZUR VERPACKUNG EINES GEGENSTANDES**
FILM FOR PACKAGING AN ARTICLE
FEUILLE D'EMBALLAGE POUR UN ARTICLE

(30) Priorität: 13.05.2009 AT 7392009
(43) Veröffentlichungstag der Anmeldung: 21.03.2012
(73) Patentinhaber: Rupp AG, 6912 Hoerbranz (AT)
(72) Erfinder: RUPP, Ludwig, A-6911 Lochau (AT)
(74) Vertreter: Schwarz, Albin
(86) Internationale Anmeldenummer: PCT/AT2010/000153
(87) Internationale Veröffentlichungsnummer: WO 2010/129976

(56) Entgegenhaltungen:
- EP-A1- 0 995 695
- EP-A1- 1 712 488
- EP-A1- 1 939 107
- US-A- 5 945 145

## Beschreibung

Die vorliegende Erfindung betrifft eine Verpackung eines Gegenstandes, insbesondere eines Lebensmittels, wie Käse, z. B. Schmelzkäsescheiben.

Verpackungen für Lebensmittel, wie Schmelzkäsescheiben, können mit Hilfe eines kontinuierlichen Verfahrens durch Herstellung eines Folienschlauches und Befüllung mit dem Lebensmittel, z. B. mit einer heißen Käsemasse, hergestellt werden. Der gefüllte Schlauch wird üblicherweise über ein Abpressband flachgedrückt, z. B. zu einem flachen Käseband plattgedrückt, und entweder noch im heißen Zustand oder nach Abkühlung in einem Wasserbad quer abgesiegelt. Das ausgeformte und gesiegelte Band wird dann zwischen den Quersiegelungen geschnitten und gestapelt.

Eine Verpackung bestehend aus einer flexiblen, siegelbaren Mehrschichtfolie ist beispielsweise aus DE 10 2005 019 620 bekannt.

In DE 3841945 ist eine Vorrichtung zur Verpackung eines Produktes in flüssiger, halbflüssiger, weicher oder feinpulvriger Form in biegsamen Umhüllungen aus Kunststoff beschrieben.

JP 9040012 betrifft eine abziehbare, thermische Klebstoffschicht zur Verpackung von geschnittenem Schmelzkäse, die direkt oder indirekt auf mindestens einer Oberfläche eines Grundmaterials gebildet wird.

EP 0 569 628 betrifft ein Verfahren und eine Vorrichtung zum Herstellen luftdicht verschlossener Käsescheiben und aus DE 2 008 806 ist eine Verpackung für Käsescheiben bekannt, die eine Folie eines flexiblen Verpackungsmaterials umfasst, wobei sich Teile der Folie über eine Siegelung an einer Seitenkanten der Scheibe hinaus erstrecken, die überlappend, jedoch unversiegelt gefaltet werden, sodass der unversiegelte Teil der überstehenden Folie zur Öffnung der Packung zurückgezogen werden und die peelfähige Siegelnaht dabei geöffnet werden kann.

In US 5,945 145, EP 1 939 107, EP 1 712 488 und EP 0 995 695 sind Folien zur Verpackung eines Gegenstandes, die eine peelfähige Siegelnaht umfassen, beschrieben, wobei nach Verpackung des Gegenstandes und Verschliessen der Folie mit Hilfe einer peelfähigen Siegelnaht ein Teil der Folie zur Öffnung der Verpackung unverklebt ist.

Begünstigt durch die Dehnung und nachmalige Schrumpfung und Plastifizierung der Folie beim Verpackungsvorgang, z. B. bei Heißabfüllung, wie bei der Abfüllung von Schmelzkäse, haftet üblicherweise ein überstehender Folienrand bei der Längssiegelung an der Veipackungsfolie. Dies führt dazu, dass der Konsument die überstehende Folie oft nur sehr schwer zu Greifen bekommt und der verpackte Gegenstand daher nur umständlich durch Auftrennen der Längsnaht aus der Folie entnommen werden kann.

Es wurde nun eine Verpackung gefunden, mit dem die Nachteile des Standes der Technik überwunden werden können.

In einem Aspekt stellt die vorliegende Erfindung eine Folie zur Verpackung eines Gegenstandes gemäß Anspruch 1 zur Verfügung. Vorteilhafte Ausführungsformen sind in den Unteransprüchen ausgeführt.

Folien, die durch die vorliegende Erfindung bereitgestellt werden, werden hierin auch als "Folie(n) gemäß (nach) vorliegender Erfindung" bezeichnet.

Folien zur Verpackung eines Gegenstandes gemäß vorliegender Erfindung umfassen flexible Folien, z. B. Kunststofffolien, wie sie zur Verpackung von Gegenständen bekannt sind. Solche Folien sind dehn- und schrumpffähig, sodass sie sich an den Gegenstand, der verpackt werden soll, nach dem Verpackungsvorgang anschmiegen. Solche Folien fallen unter die Bezeichnung "Flow-Pack Material", beispielsweise hergestellt aus Polyethylen (PE), Polypropylen (PP), z.B. OPP (orientiertes Polypropylen), Polyamid (PA), Polyethylenterephthalat (PET) oder Mischungen aus genannten Folienmaterialien, wie PA/PE oder PET/PE.

Eine Folie gemäß vorliegender Erfindung kann direkt als Verpackungsmaterial dienen, kann aber auch auf ein anderes Verpackungsmaterial aufgebracht sein, beispielsweise als Überzug, z. B. auf Verpackungsmaterial aus Papier, Pappe, Kunststoff, Metallfolie. Bevorzugt dient eine Folie gemäß vorliegender Erfindung direkt als Verpackungsmaterial. Folien gemäß vorliegender Erfindung können transparent (durchsichtig oder durchscheinend) oder undurchsichtig sein. Die Folien können bedruckt oder unbedruckt sein, beispielsweise kann sich auf einer Folie gemäß vorliegender Erfindung ein Hinweis auf das verpackte Produkt befinden, beispielsweise mit einem Hinweise auf den Hersteller. Folien gemäß vorliegender Erfindung schließen weiterhin metallbedampfte Folien und Lackfolien mit ein.

Gegenstände, die mit einer Folie gemäß vorliegender Erfindung verpackt werden können, umfassen alle Gegenstände, die mit Folien direkt oder indirekt verpackt werden können und umfassen in einem Aspekt Lebensmittel, bevorzugt Käse, besonders bevorzugt Schmelzkäse, beispielsweise Schmelzkäsescheiben.

"Indirekt verpackt" bedeutet hierin, dass der Gegenstand bereits mit einem anderen Material verpackt ist, bevor die Folie gemäß vorliegender Erfindung über der anderen Verpackung angebracht wird.

Eine peelfähige Siegelnaht ist eine Naht, mit der der Inhalt der Verpackungsfolie, vorzugsweise luftdicht, von der Umgebung abgeschlossen werden kann und die durch Anwendung einer Kraft, die im wesentlichen senkrecht zu der peelfähigen Siegelnaht angreift, geöffnet werden kann, worauf der verpackte Inhalt aus der Folie entnehmbar ist. "Peelfähig", wie hierin verwendet, bedeutet, dass die Siegelnaht durch eine Kraft, die im wesentlichen senkrecht zur Siegelnaht ausgeübt wird, geöffnet werden kann, insbesondere aufreißbar ist.

Eine peelfähige Siegelnaht in einer Folie gemäß vorliegender Erfindung kann wie üblich hergestellt sein, insbesondere durch Heißversiegelung. Insbesondere erfolgt die Herstellung derart, dass die peelfähige Siegelnaht luftdicht ist.

Hochpolymeres, thermoplastisches Material, mit dem die Verpackungsfolie gemäß vorliegender Erfindung punktförmig versehen ist, umfasst ein hochpolymeres, thermoplastisches Material, das sich von dem Material, aus dem die Verpackungsfolie besteht unterscheidet. Vorzugsweise ist dieses Material ein Kleber, insbesondere ein Schmelzkleber.

Geeignete Kleber sind solche, mit denen normalerweise Folien verklebt werden können, wobei eine Verklebung mit einem solchen Kleber bevorzugt luftdicht ist. Bevorzugt entwickelt der Kleber seine Klebeeigenschaften beim Erwärmen einer Folie. Solche Kleber umfassen beispielsweise EVA-Copolymere (Ethylen-Vinylacetat Copolymere) und/oder PUR-Reaktionskleber (Polyurethan Reaktionskleber).

Bevorzugt verläuft die punktförmige Spur des hochpolymeren, thermoplastischen Materials auf der Folie gemäß vorliegender Erfindung im wesentlichen parallel zu der peelfähigen Siegelnaht. Die punktförmige Spur wird auf der Folie derart angebracht, dass das hochpolymere, thermoplastische Material in der Form von kleinen Erhebungen auf der Folie vorliegt, z. B. in der Form von Noppen. Eine punktförmige Spur aus hochpolymeren, thermoplastischen Material, wie hierin verwendet, schließt somit eine Noppenspur aus hochpolymeren, thermoplastischen Material mit ein.

Der Abstand der Punkte, z. B. Noppen, auf der Folie hängt im wesentlichen von der Größe des zu verpackenden Gegenstandes ab. Im allgemeinen sollte der Abstand so groß sein, dass die überstehende Folie zwischen zwei Punkten nicht an der Verpackungsfolie anhaften kann, beispielsweise schließt der Abstand zwischen zwei Punkten einen Abstand von (etwa) 0,1 cm bis (etwa) 3 cm, beispielsweise (etwa) 0,3 bis (etwa) 1 cm ein. Die Abstände der Punkte, z. B. Noppen auf der Folie schließen regelmäßige und unregelmäßige, bevorzugt regelmäßige Abstände ein. Die punktförmige Spur befindet sich nach dem Verschließen des sackförmigen Behälters unterhalb der peelfähigen Siegelnaht auf dem überstehenden Teil der Folie.

In einer bevorzugten Ausführungsform sind die Punkte der punktförmigen Kleberspur zur besseren Sichtbarmachung für den Verbraucher in einer Farbe, die sich von der Farbe der Folie unterscheidet.

In einer bevorzugten Ausführungsform hat die Folie gemäß vorliegender Erfindung die Form eines sackförmigen Behälters; bevorzugt weist der sackförmige Behälter eine rechteckige Form auf; bevorzugt ist der sackförmige Behälter an zwei parallelen Seiten versiegelt, mit einem vorderen Folienanteil und einem hinteren Folienanteil, wobei die Folie derart bemessen ist, dass ein Teil des vorderen Folienanteils oder ein Teil des hinteren Folienanteils über eine Seite des sackförmigen Behälters hinausragt und umklappbar ist.

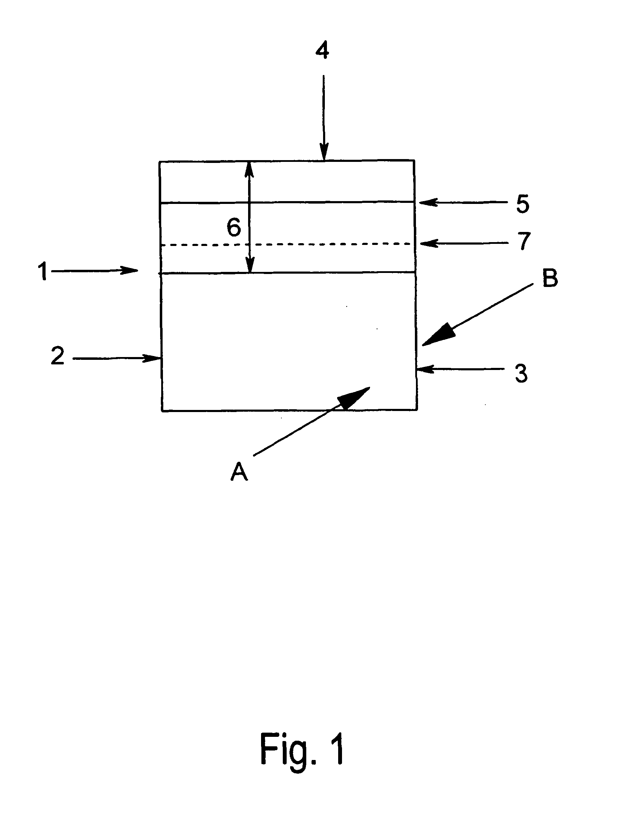

In der Zeichnung (Fig. 1), ist schematisch eine Folie gemäß vorliegender Erfindung in der Form eines sackförmigen Behälters (1), der im wesentlichen eine rechteckige Form aufweist und an zwei parallelen Seiten (2) und (3) versiegelt ist, mit einem vorderen Folienanteil (A) und einem hinteren Folienanteil (B), wobei die Folie derart bemessen ist, dass ein Teil (6) des vorderen Folienanteils (A) oder des hinteren Folienanteils (B) über die Seite (4) der des sackförmigen Behälters (1) hinausragt und umklappbar bzw. umgeklappt ist, wobei der Teil (6) eine peelfähige Siegelnaht (5) zum, insbesondere luftdichten, Verschließen des sackförmigen Behälters (1) umfasst, wobei die Folie dadurch gekennzeichnet ist, dass der Teil (6) mit einer punktförmigen Spur eines hochpolymeren, thermoplastischen Materials (7), insbesondere einer Noppenspur, versehen ist, die im wesentlichen parallel zur peelfähige Siegelnaht (5) verläuft und die sich nach dem Verschließen des sackförmigen Behälters unterhalb der peelfähigen Siegelnaht (5) befindet.

Die Herstellung einer Folie gemäß vorliegender Erfindung kann dadurch erfolgen, dass auf jenen Teil der Folie, der zur Öffnung der Verpackung unverklebt ist und der über die peelfähige Siegelnaht hinausragt, bevorzugt im wesentlichen parallel zu der peelfähige Siegelnaht, punktförmig ein hochpolymeres, thermoplastisches Material aufgebracht wird.

Dazu kann beispielsweise im Falle von sackförmigen Verpackungen auf einer Seite einer Folie, die zur Verpackung vorgesehen ist und die von einer Lagerrolle abgerollt wird, in Abrollrichtung kontinuierlich und punktförmig, z. B. noppenförmig, ein hochpolymeres, thermoplastisches Material aufgebracht werden, sodass auf einer Seite der Folie in Abrollrichtung eine Noppenspur gebildet wird, worauf die Folie kontinuierlich durch Siegelung zu einem Schlauch geformt, mit dem zu verpackenden Material befüllt und zum Flow-Pack geformt wird.

Durch das punktförmig, z. B. noppenförmig aufgebrachte hochpolymere, thermoplastische Material auf jenem Teil der Folie, der nach dem Verpackungsvorgang über die peelfähige Siegelnaht übersteht, haftet bzw. verklebt der überstehende Teil der Folie nicht an bzw. mit der Verpackungsfolie, da die aufgebrachten Punkte vor dem Befüllen mit einem Gegenstand, z. B. mit heißem Schmelzkäse, an der Luft abkühlen und daher keine (Schmelz)klebefunktion besitzen. Ein Verbraucher kann daher den überstehenden Teil der Folie einfach und leicht ergreifen und die Versiegelung der Folie durch eine Kraft in der Ebene, die im wesentlichen senkrecht zur peelfähigen Siegelnaht liegt, ohne Schwierigkeiten und ohne Aufwand öffnen. Durch die punktförmige, insbesondere noppenförmige, Aufbringung des hochpolymeren, thermoplastischen Materials kann eine Folie gemäß vorliegender Erfindung zur, gegenüber dem Stand der Technik erleichterten Öffnung der peelfähigen Siegelnaht verwendet werden.

In einem weiteren Aspekt stellt die vorliegende Erfindung die Verwendung
- einer Folie gemäß vorliegender Erfindung zur Verpackung eines Lebensmittels, z. B. Käse, insbesondere Schmelzkäse;
- eines hochpolymeren, thermoplastischen Materials zur Verminderung oder Verhinderung des Anhaftens von Folie, die nach Verpackung eines Gegenstandes und Verschließen der Folie mit Hilfe einer peelfähige Siegelnaht über die peelfähige Siegelnaht hinausragt, an die Verpackungsfolie; dadurch gekennzeichnet., dass jener Teil der Folie, der nach Verpackung des Gegenstandes zur Öffnung der Verpackung unverklebt ist und über die peelfähige Siegelnaht hinausragt, punktförmig, insbesondere noppenförmig, mit hochpolymerem, thermoplastischen Material versehen ist;
- eines hochpolymeren, thermoplastischen Materials zur Öffnung einer peelfähigen Siegelnaht einer Folie zur Verpackung eines Gegenstandes, wobei die Folie, die nach Verpackung eines Gegenstandes und Verschließen der Folie mit Hilfe einer peelfähige Siegelnaht über die peelfähige Siegelnaht hinausragt, punktförmig, insbesondere noppenförmig, mit dem hochpolymeren, thermoplastischen Material versehen ist; zur Verfügung.

## Patentansprüche

1. Folie zur Verpackung eines Gegenstandes, die eine peelfähige Siegelnaht umfasst und die derart bemessen ist, dass nach Verpackung des Gegenstandes und Verschließen der Folie mit Hilfe der peelfähige Siegelnaht ein Teil der Folie zur Öffnung der Verpackung unverklebt ist und über die peelfähige Siegelnaht hinausragt, **dadurch gekennzeichnet, dass** jener Teil der Folie, der nach Verpackung des Gegenstandes zur Öffnung der Verpackung unverklebt ist und über die peelfähige Siegelnaht hinausragt, punktförmig, insbesondere noppenförmig, mit hochpolymerem, thermoplastischen Material versehen ist.

2. Folie nach Anspruch 1 in der Form eines sackförmigen Behälters (1), der im wesentlichen eine rechteckige Form aufweist und an zwei parallelen Seiten (2) und (3) versiegelt ist, mit einem vorderen Folienanteil (A) und einem hinteren Folienanteil (B), wobei die Folie derart bemessen ist, dass ein Teil (6) des vorderen Folienanteils (A) oder des hinteren Folienanteils (B) über die Seite (4) der des sackförmigen Behälters (1) hinausragt und umklappbar ist, wobei der Teil (6) eine peelfähige Siegelnaht (5) zum, insbesondere luftdichten, Verschließen des sackförmigen Behälters (1) umfasst, **dadurch gekennzeichnet, dass** der Teil (6) mit einer punktförmigen Spur eines hochpolymeren, thermoplastischen Materials (7), insbesondere einer Nopppenspur, versehen ist, die im wesentlichen parallel zur peelfähigen Siegelnaht (5) verläuft und die sich nach dem Verschließen des sackförmigen Behälters unterhalb der peelfähigen Siegelnaht (5) befindet.

3. Folie nach einem der vorhergehenden Ansprüche, **dadurch gekennzeichnet, dass** sie eine Kunststofffolie ist.

4. Folie nach einem der vorhergehenden Ansprüche, **dadurch gekennzeichnet, dass** sie ein Flow-Pack Material darstellt.

5. Folie nach einem der vorhergehenden Ansprüche, **dadurch gekennzeichnet, dass** das hochpolymere, thermoplastische Material ein Kleber, insbesondere ein Schmelzkleber, ist.

6. Folie nach einem der vorhergehenden Ansprüche, **dadurch gekennzeichnet, dass** die Punkte aus hochpolymerem, thermoplastischen Material noppenförmig aufgebracht sind.

7. Folie nach einem der vorhergehenden Ansprüche, **dadurch gekennzeichnet, dass** die Punkte aus hochpolymerem, thermoplastischen Material in einer Farbe sind, die sich von der Farbe de Folie unterscheidet.

8. Verwendung einer Folie gemäß einem der Ansprüche 1 bis 6, **dadurch gekennzeichnet, dass** der Gegenstand der verpackt wird, ein Lebensmittel ist.

9. Verwendung einer Folie gemäß Anspruch 7 **dadurch gekennzeichnet, dass** der Gegenstand der verpackt wird, Käse, insbesondere Schmelzkäse ist.

10. Verwendung eines hochpolymeren, thermoplastischen Materials zur Verminderung oder Verhinderung des Anhaftens von Folie, die nach Verpackung eines Gegenstandes und Verschließen der Folie mit Hilfe einer peelfähige Siegelnaht über die peelfähige Siegelnaht hinausragt, an die Verpackungsfolie, **dadurch gekennzeichnet., dass** jener Teil der Folie, der nach Verpackung des Gegenstandes zur Öffnung der Verpackung unverklebt ist und über die peelfähigen Siegelnaht hinausragt, punktförmig, insbesondere noppenförmig, mit hochpolymerem, thermoplastischen Material versehen ist.

11. Verwendung eines hochpolymeren, thermoplastischen Materials zur Öffnung einer peelfähigen Siegelnaht einer Folie zur Verpackung eines Gegenstandes, **dadurch gekennzeichnet, dass** Folie, die nach Verpackung eines Gegenstandes und Verschließen der Folie mit Hilfe einer peelfähige Siegelnaht über die peelfähige Siegelnaht hinausragt, punktförmig, insbesondere noppenförmig, mit dem hochpolymeren, thermoplastischen Material versehen ist.

## Claims

1. A film for packaging an article, which film comprises a peelable sealed seam and is dimensioned such that, after packaging the article and closing the film by means of the peelable sealed seam, a portion of the film remains unglued for opening the packaging and projects beyond the peelable sealed seam, **characterized in that** the portion of the film which, after packaging the article, remains unglued for opening the packaging and projects beyond the peelable sealed seam is provided with a high-polymer thermoplastic material in a punctiform, in particular knob-shaped, manner.

2. A film according to claim 1 in the form of a bag-shaped container (1) which has an essentially rectangular shape and is sealed on two parallel sides (2) and (3), comprising a front film part (A) and a rear film part (B), with the film being dimensioned such that a portion (6) of the front film part (A) or the rear film part (B) projects beyond the side (4) of the bag-shaped container (1) and can be folded down, wherein the portion (6) comprises a peelable sealed seam (5) for sealing, in particular hermetically sealing, the bag-shaped container (1), **characterized in that** the portion (6) is provided with a punctiform mark of a high-polymer thermoplastic material (7), in particular a knob mark, which runs essentially parallel to the peelable sealed seam (5) and is located underneath the peelable sealed seam (5) after the bag-shaped container has been closed.

3. A film according to any of the preceding claims, **characterized in that** it is a plastic film.

4. A film according to any of the preceding claims, **characterized in that** it constitutes a flow-pack material.

5. A film according to any of the preceding claims, **characterized in that** the high-polymer thermoplastic material is an adhesive, in particular a hot-melt adhesive.

6. A film according to any of the preceding claims, **characterized in that** the dots of a high-polymer thermoplastic material are applied in the shape of knobs.

7. A film according to any of the preceding claims, **characterized in that** the dots of a high-polymer thermoplastic material have a colour which is different from the colour of the film.

8. The use of a film according to any of claims 1 to 6, **characterized in that** the article which is packaged is a food.

9. The use of a film according to claim 7, **characterized in that** the article which is packaged is cheese, in particular processed cheese.

10. The use of a high-polymer thermoplastic material for reducing or preventing the sticking of film to the packaging film, which film, after packaging an article and closing the film by means of a peelable sealed seam, projects beyond the peelable sealed seam, **characterized in that** the portion of the film which, after packaging the article, remains unglued for opening the packaging and projects beyond the peelable sealed seam is provided with a high-polymer thermoplastic material in a punctiform, in particular knob-shaped, manner.

11. The use of a high-polymer thermoplastic material for opening a peelable sealed seam of a film for packaging an article, **characterized in that** film which, after packaging an article and closing the film by means of a peelable sealed seam, projects beyond the peelable sealed seam is provided with the high-polymer thermoplastic material in a punctiform, in particular knob-shaped, manner.

## Revendications

1. Feuille d'emballage pour un article qui comprend une couture de scellement pouvant être pelée et qui est dimensionnée de telle sorte qu'après l'emballage de l'objet et la fermeture de la feuille au moyen de la couture de scellement pouvant être pelée, une partie de la feuille pour l'ouverture de l'emballage est non collée et dépasse de la couture de scellement pouvant être pelée, **caractérisée en ce que** la partie de la feuille pour l'ouverture de l'emballage, qui n'est pas collée après l'emballage de l'article et qui dépasse de la couture de scellement pouvant être pelée, est munie d'un matériau polymère de poids moléculaire élevé, thermoplastique, en forme de pois, en particulier en forme de pastilles.

2. Feuille selon la revendication 1 sous la forme d'un contenant en forme de sachet (1) qui présente essentiellement une forme rectangulaire et qui est scellé sur deux côtés parallèles (2) et (3), comprenant une partie de feuille avant (A) et une partie de feuille arrière (B), la feuille étant dimensionnée de telle sorte qu'une partie (6) de la partie de feuille avant (A), ou de la partie de feuille arrière (B), dépasse sur le côté (4) du contenant en forme de sachet (1) et peut être rabattue, la partie (6) comprenant une couture de scellement (5) pouvant être pelée, pour enfermer le contenant en forme de sachet (1), en particulier étanche à l'air, **caractérisée en ce que** la partie (6) est munie d'une impression en forme de pois dans un matériau polymère de poids moléculaire élevé, thermoplastique (7), en particulier d'une impression en pastilles, qui s'étend essentiellement à la couture de scellement (5) pouvant être pelée et qui se trouve en dessous de la couture de scellement (5) pouvant être pelée après la fermeture du contenant en forme de sachet.

3. Feuille selon l'une des revendications précédentes **caractérisée en ce qu'**elle est une feuille en matière plastique.

4. Feuille selon les revendications précédentes **caractérisée en ce qu'**elle représente un matériau de conditionnement sous film non rétractable ("flow-pack").

5. Feuille selon l'une des revendications précédentes **caractérisée en ce que** le matériau polymère de poids moléculaire élevé, thermoplastique, est un adhésif, en particulier un adhésif fusible.

6. Feuille selon l'une des revendications précédentes **caractérisée en ce que** les pois dans le matériau polymère de poids moléculaire élevé, thermoplastique, sont rapportés sous la forme de pastilles.

7. Feuille selon l'une des revendications précédentes **caractérisée en ce que** les pois dans le matériau polymère de poids moléculaire élevé, thermoplastique, ont une couleur qui se différencie de la couleur de la feuille.

8. Utilisation d'une feuille selon l'une des revendications de 1 à 6 **caractérisée en ce que** l'article qui est emballé est un produit alimentaire.

9. Utilisation d'une feuille selon la revendication 7 **caractérisée en ce que** l'article qui est emballé est du fromage, en particulier du fromage fondu.

10. Utilisation d'un matériau polymère de poids moléculaire élevé, thermoplastique, pour la diminution ou l'empêchement du collage d'une feuille, qui, après l'emballage d'un article et la fermeture de la feuille au moyen d'une couture de scellement pouvant être pelée, dépasse de la couture de scellement pouvant être pelée, **caractérisée en ce que** la partie de la feuille pour l'ouverture de l'emballage, qui n'est pas collée après l'emballage de l'article et qui dépasse de la couture de scellement pouvant être pelée, est munie d'un matériau polymère de poids moléculaire élevé, thermoplastique, en forme de pois, en particulier en forme de pastilles.

11. Utilisation d'un matériau polymère de poids moléculaire élevé, thermoplastique, pour l'ouverture d'une couture de scellement pouvant être pelée d'une feuille pour l'emballage d'un article, **caractérisée en ce que** feuille qui dépasse de la couture de scellement pouvant être pelée après l'emballage d'un article et la fermeture de la feuille à l'aide de la couture de scellement pouvant être pelée, est munie d'un matériau polymère de poids moléculaire élevé, thermoplastique, en forme de pois, en particulier en forme de pastilles.
